# EUROPÄISCHE PATENTSCHRIFT

(11) **EP 2 734 405 B1**
(45) Veröffentlichungstag und Bekanntmachung des Hinweises auf die Patenterteilung: **12.08.2015**
(21) Anmeldenummer: 12732794.8
(22) Anmeldetag: 30.06.2012
(51) Int. Cl.: B60N 2/14, B60N 2/06, B60N 2/02

(54) **FAHRZEUGSITZ**
VEHICLE SEAT
SIÈGE DE VÉHICULE

(30) Priorität: 22.07.2011 DE 102011108374
(43) Veröffentlichungstag der Anmeldung: 28.05.2014
(73) Patentinhaber: Johnson Controls Components GmbH & Co. KG, 67657 Kaiserslautern (DE)
(72) Erfinder: SCHULZ, Jens, 67657 Kaiserslautern (DE); CHRISTOFFEL, Thomas, 66909 Herschweiler-Pettersheim (DE)
(74) Vertreter: Wilhelm, Wolfgang
(86) Internationale Anmeldenummer: PCT/EP2012/002783
(87) Internationale Veröffentlichungsnummer: WO 2013/013759

(56) Entgegenhaltungen:
- EP-A2- 1 772 306

## Beschreibung

Die Erfindung betrifft ein Verfahren zur Steuerung eines längseinstellbaren und drehbaren Fahrzeugsitzes, welcher eine in einer ersten Unterschiene beweglich geführte erste Oberschiene, eine in einer zweiten Unterschiene beweglich geführte zweite Oberschiene, einen ersten Motor zum Antrieb der ersten Oberschiene, einen zweiten Motor zum Antrieb der zweiten Oberschiene und eine Sitzschale umfasst, wobei durch eine gleich gerichtete Verschiebung der Oberschienen relativ zu den Unterschienen die Sitzschale geradlinig verschoben wird und wobei durch eine Verschiebung der ersten Oberschiene relativ zu der zweiten Oberschiene die Sitzschale eine Drehung um eine vertikale Achse erfährt.

### Stand der Technik

Aus der WO 2011 / 006 592 A1 ist ein längseinstellbarer und drehbarer Fahrzeugsitz bekannt, welcher ein Schienensystem umfasst, mittels welchem eine Sitzschale des Fahrzeugsitzes zur Längseinstellung in Fahrtrichtung sowie entgegen der Fahrtrichtung verschiebbar ist. Ein solches Schienensystem weist dabei zwei parallel zueinander in Fahrtrichtung verlaufende Unterschienen auf, welche am Fahrzeugboden befestigt sind. Zwei Oberschienen, welche in je einer der Unterschienen beweglich geführt sind, tragen gemeinsam die Sitzschale. Zum Antrieb der Oberschienen sind Elektromotoren vorgesehen.

Die Sitzschale, beziehungsweise eine Konsole, auf welcher die Sitzschale befestigt ist, ist dabei um eine vertikale Achse drehbar an einer der beiden Oberschienen gelagert. Durch Verschiebung der einen Oberschiene relativ zu der anderen Oberschiene erfährt die Sitzschale eine Drehung um diese vertikale Achse. Eine solche Drehung erleichtert den Einstieg sowie den Ausstieg eines Insassen.

In Abhängigkeit von der eingestellten Längsposition der Sitzschale kann es dabei während einer Drehung zu einer Kollision von Körperteilen eines Insassen mit weiteren Fahrzeugteilen kommen. Beispielsweise können die Knie eines Fahrers mit dem Lenkrad oder der B-Säule kollidieren.

Ein ähnlicher Fahrzeugsitz ist aus der JP 09 156 404 A bekannt. Durch eine Verschiebung einer Oberschiene relativ zu der anderen Oberschiene erfährt der Sitz eine Drehung um eine vertikale Achse. Zum Antrieb sind Elektromotoren vorgesehen.

Aus der JP 2000 052 824 A ist ein Verfahren zur Steuerung eines Fahrzeugsitzes bekannt. Dabei erfährt der Fahrzeugsitz eine durch eine entsprechende Kurvenbahn vorgegebene Bewegung, welche eine Drehung um eine vertikale Achse und eine geradlinige Verschiebung umfasst.

Die DE 10 2006 035 439 A1 offenbart ein Fahrzeugzugangssystem, welches unter anderem eine elektronische Speichereinrichtung zur Speicherung von Sitzpositionen umfasst.

Aus der DE 199 16 091 A1 ist eine Vorrichtung zur Verstellung von Innenraumteilen eines Fahrzeugs, insbesondere eines Lenkrads, bekannt.

### Aufgabe

Der Erfindung liegt die Aufgabe zugrunde, ein Verfahren zur Steuerung eines Fahrzeugsitzes der eingangs genannten Art anzugeben, welches derartige Kollisionen von Körperteilen eines Insassen mit Fahrzeugteilen vermeidet.

### Lösung

Diese Aufgabe wird erfindungsgemäß durch ein Verfahren mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Mit der Erfindung wird vorgesehen, dass zunächst eine Ausgangsposition gespeichert wird, danach die Sitzschale aus der Ausgangsposition in eine Startposition geradlinig verschoben wird, danach aus der Startposition die Sitzschale um einen ersten Winkel in eine Zwischenposition gedreht wird, danach die Sitzschale in Fahrtrichtung in eine erste Mittelposition geradlinig verschoben wird, und dann die Sitzschale bis zu einem zweiten Winkel in eine Endposition gedreht wird.

Bei einem durch das erfindungsgemäße Verfahren hervorgerufenen Bewegungsablauf ist eine Kollision von Körperteilen, insbesondere der Knie, eines Fahrers mit einem vor der Sitzschale befindlichen Lenkrad vermieden.

Vorteilhaft wird die Sitzschale aus der ersten Mittelposition bis zu dem zweiten Winkel gedreht und gleichzeitig geradlinig verschoben bis die Endposition erreicht ist. Mittels einer solchen überlagerten Bewegung wird die Sitzschale so nahe wie möglich an einer B-Säule der Karosserie des Fahrzeugs vorbei geführt, wodurch der Abstand zu dem Lenkrad maximiert ist.

Sofern auch das Lenkrad mit einem Einstellantrieb ausgestattet ist, ist gemäß einer vorteilhaften Ausgestaltung der Erfindung vorgesehen, dass gleichzeitig das Lenkrad in Längsrichtung von der Sitzschale weg und/oder in Vertikalrichtung nach oben bewegt wird. Dadurch wird das Lenkrad noch weiter von den Knien des Fahrers entfernt.

Als besonders vorteilhaft hat es sich heraus gestellt, wenn das Lenkrad während der Drehung der Sitzschale um den ersten Winkel in Längsrichtung von der Sitzschale weg und/oder in Vertikalrichtung nach oben bewegt wird.

Auch andere, zusätzlich in dem Fahrzeug vorhandene Antriebe können vorteilhaft mit einbezogen werden, beispielsweise ein Türöffner oder Türantrieb.

Weitere vorteilhafte Ausgestaltungen der Erfindung sind den weiteren Unteransprüchen zu entnehmen.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf dieses Ausführungsbeispiel beschränkt. Es zeigen:

Es zeigen:
- Fig. 1: ein Unterbau eines bekannten Fahrzeugsitzes,
- Fig. 2: den in Fig. 1 gezeigten Unterbau mit gedrehter Konsole,
- Fig. 3: einen Fahrzeugsitz in Gebrauchsstellung,
- Fig. 4: einen Fahrzeugsitz in gedrehter Stellung,
- Fig. 5: eine schematische Darstellung eines Steuerungssystems zur Steuerung des Fahrzeugsitzes,
- Fig. 6: eine schematische Darstellung eines Fahrzeugsitzes in Ausgangsposition,
- Fig. 7: eine schematische Darstellung eines Fahrzeugsitzes in Startposition,
- Fig. 8: eine schematische Darstellung eines Fahrzeugsitzes in Zwischenposition,
- Fig. 9: eine schematische Darstellung eines Fahrzeugsitzes in erster Mittelposition,
- Fig. 10: eine schematische Darstellung eines Fahrzeugsitzes in zweiter Mittelposition,
- Fig. 11: eine schematische Darstellung eines Fahrzeugsitzes in Endposition und
- Fig. 12: ein Bewegungsprofil eines definierten Messpunktes des Fahrzeugsitzes.

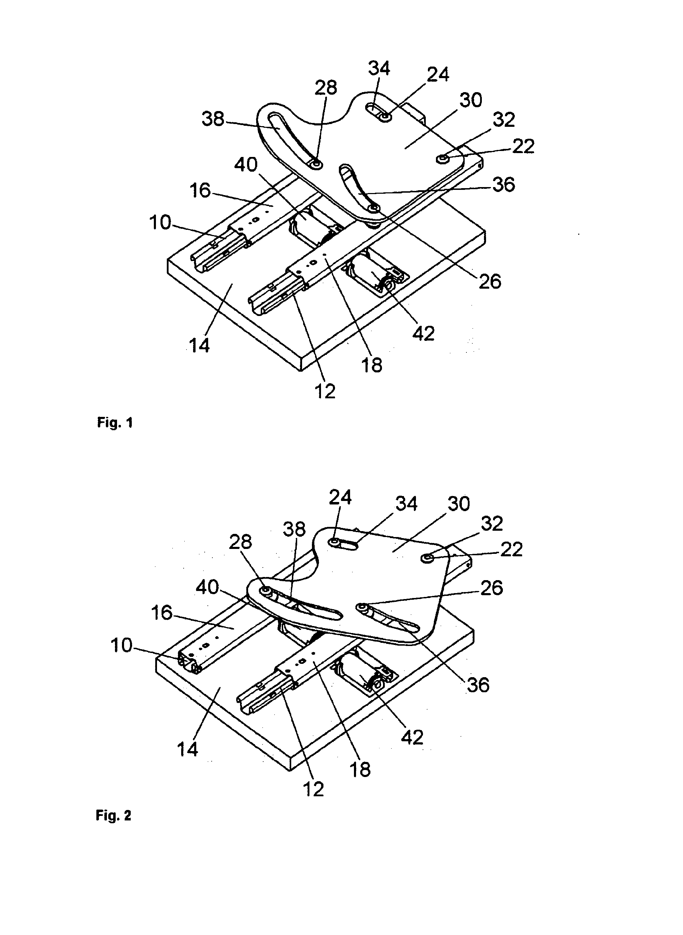

In Fig. 1 ist ein Unterbau eines bekannten Fahrzeugsitzes dargestellt. Eine erste Unterschiene 10 und eine zweite Unterschiene 12 sind parallel zueinander an einem Fahrzeugboden 14 befestigt. Eine erste Oberschiene 16 ist in der ersten Unterschiene 10 beweglich geführt. Ebenso ist eine zweite Oberschiene 18 in der zweiten Unterschiene 12 beweglich geführt. Die Bewegungsrichtung der Oberschienen 16, 18 bezüglich der Unterschienen 10, 12 wird als Längsrichtung x bezeichnet.

In diesem Beispiel verläuft die Längsrichtung x parallel zu der Fahrtrichtung. Die Oberschienen 16, 18 sind somit in Fahrtrichtung sowie entgegen der Fahrtrichtung verschiebbar. Es ist auch denkbar, die Unterschienen 10, 12 schräg oder geneigt zur Fahrtrichtung anzuordnen. In diesem Fall sind die Oberschienen 16, 18 schräg oder geneigt zur Fahrtrichtung verschiebbar.

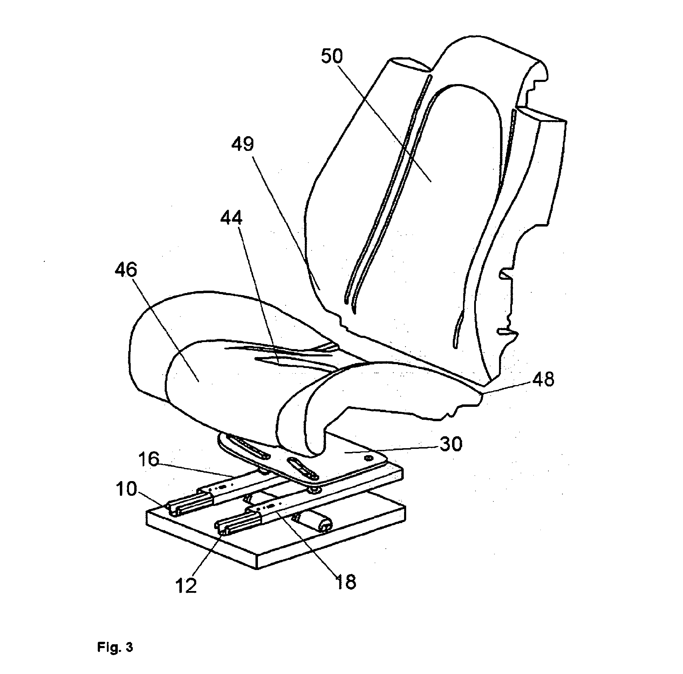

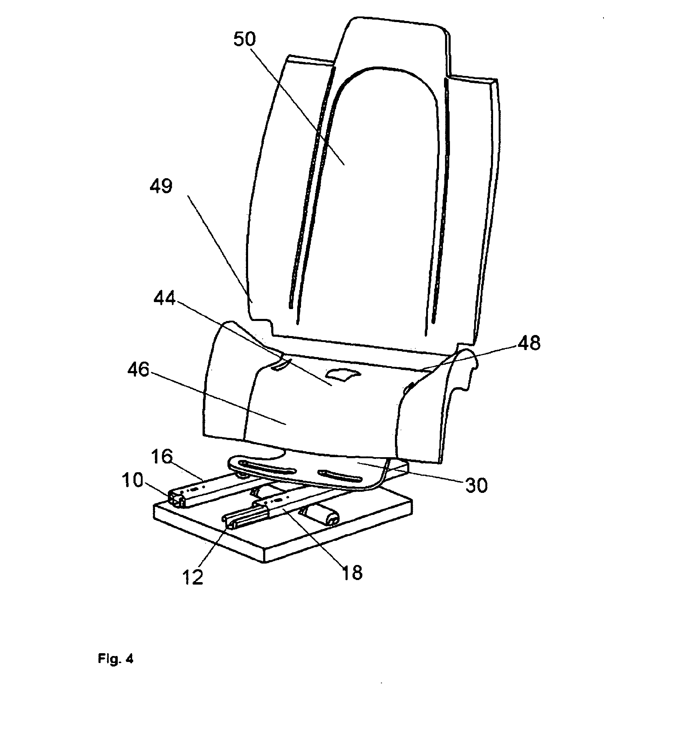

Eine Konsole 30 liegt auf den Oberschienen 16, 18 auf und ist an diesen befestigt. Auf der Konsole 30 ist eine in Fig. 3
und Fig. 4 gezeigte Sitzschale 49 montiert. Die Konsole 30 hat in diesem Beispiel die Form einer ebenen Platte, welche sich im Wesentlichen in Längsrichtung x und in einer senkrecht dazu verlaufenden, als Querrichtung y bezeichneten Richtung erstreckt.

Durch synchrones Verschieben der ersten Oberschiene 16 und der zweiten Oberschiene 18 relativ zu den Unterschienen 10, 12 erfährt die Konsole 30 eine Verschiebung in Längsrichtung x.

Eine senkrecht zu der Längsrichtung x und senkrecht zu der Querrichtung y verlaufende Richtung wird im Folgenden als Vertikalrichtung bezeichnet.

Die Konsole 30 weist eine Bohrung 32 auf, durch welche ein an der zweiten Oberschiene 18 befestigter Drehbolzen 22 ragt. Die Konsole 30 ist somit um die Mittelachse des Drehbolzens 22 drehbar an der zweiten Oberschiene 18 gelagert.

Weiterhin weist die Konsole 30 eine erste Ausnehmung 34 auf, durch welche ein an der ersten Oberschiene 16 befestigter erster Bolzen 24 ragt. Die erste Ausnehmung 34 hat in diesem Beispiel die Form eines in Querrichtung y verlaufenden geraden Langlochs mit einer dem Durchmesser des ersten Bolzens 24 entsprechenden Breite. Die erste Ausnehmung 34 kann sich auch schräg zur Querrichtung y erstrecken. Auch eine andere Gestaltung, beispielsweise eine Krümmung, ist denkbar. Weiterhin ist denkbar, dass die erste Ausnehmung 34 sich bis zum Rand der Konsole 30 erstreckt, wodurch eine nach außen offene gabelförmige Anordnung entsteht, in welcher der erste Bolzen 24 geführt ist.

Die Konsole 30 weist außerdem eine zweite Ausnehmung 36 auf, durch welche ein an der zweiten Oberschiene 18 befestigter zweiter Bolzen 26 ragt. Die zweite Ausnehmung 36 hat die Gestalt eines Langlochs in Form eines Kreissegments mit einer dem Durchmesser des zweiten Bolzens 26 entsprechenden Breite. Der Radius dieses Kreissegments entspricht dem Abstand der Mittelachse des Drehbolzens 22 zur Mittelachse des zweiten Bolzens 26.

Weiterhin weist die Konsole 30 eine dritte Ausnehmung 38 auf, durch welche ein an der ersten Oberschiene 16 befestigter dritter Bolzen 28 ragt. Die dritte Ausnehmung 38 hat die Form eines gekrümmten Langlochs mit einer dem Durchmesser des dritten Bolzens 28 entsprechenden Breite.

Die Mittelachsen des Drehbolzens 22 und der Bolzen 24, 26, 28 verlaufen parallel zueinander in Vertikalrichtung. Die Ausnehmungen 34, 36, 38 sind so ausgestaltet, dass bei einer Verschiebung der ersten Oberschiene 16 relativ zu der zweiten Oberschiene 18 in Längsrichtung x eine Drehung der Konsole 30 um die Mittelachse des Drehbolzens 22 ermöglicht ist.

Eine durch eine solche Verschiebung der ersten Oberschiene 16 relativ zu der zweiten Oberschiene 18 erreichte Stellung ist in Fig. 2 dargestellt. Die Konsole 30 hat dabei gegenüber der in Fig. 1 gezeigten Stellung eine Drehung um die in Vertikalrichtung verlaufende Mittelachse des Drehbolzens 22 erfahren.

Zum Antrieb der ersten Oberschiene 16 ist ein erster Motor 40 vorgesehen, welcher vorliegend im Fahrzeugboden 14 angeordnet ist. Ebenso ist zum Antrieb der zweiten Oberschiene 18 ein zweiter Motor 42 vorgesehen, welcher vorliegend ebenfalls im Fahrzeugboden 14 angeordnet ist. Die Motoren 40, 42 sind beispielsweise als elektronisch kommutierte oder als bürstenbehaftete Gleichstrommotoren ausgeführt.

Es ist auch denkbar, die Motoren 40, 42 an anderen Stellen, beispielsweise auf dem Fahrzeugboden 14 oder auch oberschienenfest anzuordnen.

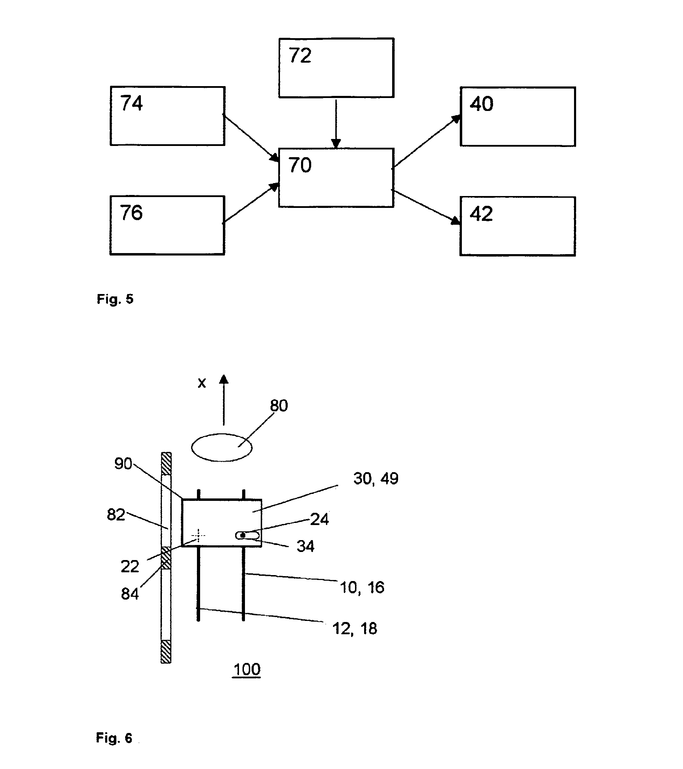

Die Motoren 40, 42 sind mittels einer in Fig. 5 dargestellten Steuereinheit 70 unabhängig voneinander ansteuerbar.

Auch ist es denkbar, nur einen Motor zum Antrieb beider Oberschienen 16, 18 vorzusehen. In diesem Fall ist zu jeder Oberschiene 16, 18 je eine zu- und abschaltbare Kupplung vorgesehen, wobei der Motor und die besagten Kupplungen von der Steuereinheit 70 ansteuerbar sind.

In Fig. 3 ist ein bekannter Fahrzeugsitz in Gebrauchsstellung dargestellt. Bei dem hier gezeigten Ausführungsbeispiel handelt es sich um einen Fahrersitz eines Linkslenkerfahrzeugs. Die durch die Unterschienen 10, 12 definierte Längsrichtung x entspricht dabei zumindest annähernd der Fahrtrichtung.

Auf der Konsole 30 ist ein Sitzkissen 44 befestigt, welches ein in Längsrichtung x vorderes Ende 46 und ein in Längsrichtung x hinteres Ende 48 aufweist. Im Bereich des hinteren Endes 48 des Sitzkissens 44 ist eine Rückenlehne 50 angeordnet. Das Sitzkissen 44 und die Rückenlehne 50 bilden die Sitzschale 49. In der Gebrauchsstellung weist das vordere Ende 46 des Sitzkissens 44 annähernd in Fahrtrichtung und das hintere Ende 48 des Sitzkissens 44 weist annähernd entgegen der Fahrtrichtung.

Eine Bewegung einer Oberschiene 16, 18 in Richtung des vorderen Endes 46 des Sitzkissens 44 entspricht somit einer Bewegung annähernd in Fahrtrichtung und wird im Folgenden als Vorwärtsbewegung bezeichnet. Eine Bewegung einer Oberschiene 16, 18 in Richtung des hinteren Endes 48 des Sitzkissens 44 entspricht einer Bewegung annähernd entgegen der Fahrtrichtung und wird im Folgenden als Rückwärtsbewegung bezeichnet.

Bei dem gewählten Ausführungsbeispiel befinden sich die erste Oberschiene 16 und die erste Unterschiene 10 in Fahrtrichtung gesehen rechts von der zweiten Oberschiene 18 und der zweiten Unterschiene 12. Die erste Oberschiene 16 und die erste Unterschiene 10 sind somit der Fahrzeugmitte zugewandt, also in Querrichtung y tunnelseitig angeordnet. Die zweite Oberschiene 18 und die zweite Unterschiene 12 sind einer Fahrertür sowie einer Karosserie zugewandt, also in Querrichtung y schwellerseitig angeordnet.

Durch Verschiebung der ersten Oberschiene 16 relativ zu der ersten Unterschiene 10 in Vorwärtsrichtung bei gleichzeitigem Feststellen der zweiten Oberschiene 18 bezüglich der zweiten Unterschiene 12 erfährt die Konsole 30 eine Drehung um eine in Vertikalrichtung verlaufende Achse, und zwar entgegen dem Uhrzeigersinn. Das Sitzkissen 44 und die Rückenlehne 50 erfahren die gleiche Drehung, wodurch das vordere Ende 46 des Sitzkissens 44 sich der Fahrertür nähert.

In dieser gedrehten Stellung des Fahrzeugsitzes, welche in Fig. 4 dargestellt ist, ist ein Einstieg des Fahrers in das Fahrzeug auf den Fahrersitz vereinfacht möglich.

Die hier beschriebe Drehung des Fahrzeugsitzes entgegen dem Uhrzeigersinn ist selbstverständlich auch durch andere Bewegungen der Oberschienen 16, 18 realisierbar, beispielsweise durch eine Verschiebung der zweiten Oberschiene 18 in Rückwärtsrichtung bei gleichzeitigem Feststellen der ersten Oberschiene 16, sowie bei gleichzeitiger Verschiebung der ersten Oberschiene 16 in Vorwärtsrichtung und der zweiten Oberschiene 18 in Rückwärtsrichtung.

Eine Drehung des Fahrzeugsitzes entgegen dem Uhrzeigersinn findet statt, wenn sich die erste Oberschiene 16 relativ zu der zweiten Oberschiene 18 in Vorwärtsrichtung bewegt.

Eine gleichzeitige Verschiebung der ersten Oberschiene 16 in Vorwärtsrichtung und der zweiten Oberschiene 18 in Rückwärtsrichtung bringt zusätzlich den Vorteil, dass die beschriebene gedrehte Stellung aus der Gebrauchsstellung heraus in minimaler Zeit erreicht wird.

Der in Fig. 1 und Fig. 2 gezeigte Unterbau ist aufgrund der Anordnung und der Abmessungen der Ausnehmungen, insbesondere der zweiten Ausnehmung 36 und der dritten Ausnehmung 38, lediglich für eine Drehung aus der Gebrauchsstellung heraus entgegen dem Uhrzeigersinn geeignet.

Zur Realisierung einer Drehung eines Fahrzeugsitzes aus der Gebrauchsstellung heraus im Uhrzeigersinn, welche beispielsweise für einen Beifahrersitz gewünscht ist, kann die Konsole 30 spiegelbildlich ausgeführt werden.

Eine Drehung des Fahrzeugsitzes im Uhrzeigersinn findet statt, wenn sich die erste Oberschiene 16 relativ zu der zweiten Oberschiene 18 in Rückwärtsrichtung bewegt.

Der Fahrzeugsitz kann auch derart ausgestaltet sein, dass eine Drehung aus der Gebrauchsstellung heraus im Uhrzeigersinn ebenso wie eine Drehung entgegen dem Uhrzeigersinn ermöglicht ist.

Bei dem in Fig. 1 und Fig. 2 gezeigten Unterbau liegt in der Gebrauchsstellung der zweite Bolzen 26 an einem Ende der zweiten Ausnehmung 36 und der dritte Bolzen 28 an einem Ende der dritten Ausnehmung 38 an. Durch Gestaltung der zweiten Ausnehmung 36 und der dritten Ausnehmung 38 derart, dass in der Gebrauchsstellung der zweite Bolzen 26 in einem Mittelbereich der zweiten Ausnehmung 36 und der dritte Bolzen 38 in einem Mittelbereich der dritten Ausnehmung 38 liegen, ist eine Drehung des Fahrzeugsitzes aus der Gebrauchsstellung heraus im Uhrzeigersinn ebenso wie entgegen dem Uhrzeigersinn ermöglicht.

Durch eine Drehung eines Fahrersitzes im Uhrzeigersinn nähert sich das hintere Ende 48 des Sitzkissens 44 der Fahrertür. In dieser Stellung des Fahrzeugsitzes ist ein Einstieg eines Mitfahrers in das Fahrzeug auf einen hinter dem Fahrersitz befindlichen Rücksitz vereinfacht möglich.

Analog dazu ist durch eine Drehung eines Beifahrersitzes entgegen dem Uhrzeigersinn ein Einstieg eines Mitfahrers in das Fahrzeug auf einen hinter dem Beifahrersitz befindlichen Rücksitz vereinfacht möglich.

Ebenso ist durch eine entsprechende Drehung eines in einer 2. Sitzreihe angeordneten Fahrzeugsitzes ein Einstieg eines Mitfahrers in das Fahrzeug auf einen in einer 3. Sitzreihe befindlichen Fahrzeugsitz vereinfacht möglich.

In einer weiteren, nicht dargestellten alternativen Ausführungsform entfallen der zweite Bolzen 26 und/oder der dritte Bolzen 28. Eine Alternativkonsole, welche auf den Oberschienen 16, 18 aufliegt und an diesen befestigt ist, umfasst, ähnlich wie die aus Fig. 1 bekannte Konsole 30, eine Bohrung 32 und eine erste Ausnehmung 34. Der Drehbolzen 22 durchragt dabei die Bohrung 32, der erste Bolzen 24 durchragt die erste Ausnehmung 34.

Vorzugsweise ist dabei eine Lagerstelle vorgesehen, welche die Alternativkonsole in Vertikalrichtung abstützt. Eine solche Lagerstelle ist beispielsweise als Wälzlager ausgeführt und umfasst eine Rolle, welche um eine in Längsrichtung x verlaufende Achse drehbar an der zweiten Oberschiene 18 gelagert ist. Die Lagerstelle kann ebenso als Kugellager oder als Reiblager ausgeführt sein.

In Fig. 5 ist ein Steuerungssystem zur Steuerung des Fahrzeugsitzes schematisch dargestellt.

Die Steuereinheit 70 enthält unter anderem eine Ablaufsteuerung zur Durchführung des erfindungsgemäßen Verfahrens.

Mittels einer Bedieneinheit 72 ist besagte Auflaufsteuerung durch einen Fahrzeuginsassen, insbesondere den Fahrer, anwählbar. Die Bedieneinheit 72 umfasst beispielsweise mehrere Schalter oder ist als Touchscreen ausgeführt. Die Bedieneinheit 72 kann auch zusätzlich eine Anzeigeeinheit umfassen, welche die aktuelle Position des Fahrzeugsitzes darstellt.

Die Bedieneinheit 72 sendet entsprechende Steuersignale an die Steuereinheit 70. Die Steuereinheit 70 ist vorliegend als separates Steuergerät ausgestaltet. Die Steuereinheit kann auch in ein anderes Steuergerät oder ein anderes Steuersystem des Fahrzeugs integriert sein. Wie bereits erwähnt, steuert die Steuereinheit 70 den ersten Motor 40 sowie den zweiten Motor 42 unabhängig voneinander an.

Insbesondere ist es auch denkbar, dass jeder der Motoren 40, 42 ein eigenes Motorsteuersystem besitzt. Besagte Motorsteuersysteme enthalten in diesem Fall die Ablaufsteuerung zur Durchführung des erfindungsgemäßen Verfahrens und sind vorzugsweise nahe des jeweiligen Motors 40, 42 angeordnet, insbesondere in das jeweilige Motorgehäuse integriert. Die Motorsteuersysteme und/oder die Motoren 40, 42 verfügen dann weiterhin über Kommunikationsschnittstellen, beispielsweise CAN-Bus oder LIN-Bus, mittels welchen ein Datenaustausch untereinander sowie mit der Bedieneinheit 72 und/oder mit weiteren Steuersystemen des Fahrzeugs ermöglicht ist.

Eine erste Positionserfassungseinheit 74 erfasst die Position der ersten Oberschiene 16 relativ zu der ersten Unterschiene 10 und sendet ein entsprechendes Signal an die Steuereinheit 70. Ebenso erfasst eine zweite Positionserfassungseinheit 76 die Position der zweiten Oberschiene 18 relativ zu der zweiten Unterschiene 12 und sendet ein entsprechendes Signal an die Steuereinheit 70.

Jede der Positionserfassungseinheiten 74, 76 umfasst vorliegend je einen Sensor, welcher aktuelle die Position der zugeordneten Oberschiene 16, 18 als Analogoder Digitalwert ermittelt. Die Positionserfassungseinheiten 74, 76 können auch in dem jeweils zugeordneten Motor 40, 42 integriert sein, wobei beispielsweise durch Zählen der Umdrehungen des entsprechenden Motors 40, 42 die aktuelle Position der entsprechenden Oberschiene 16, 18 berechnet wird.

Auch ist denkbar, dass eine Positionserfassungseinheit 74, 76 mehrere separate Sensoren umfasst, wobei jeder Sensor lediglich eine definierbare Position der zugeordneten Oberschiene 16, 18 erkennt.

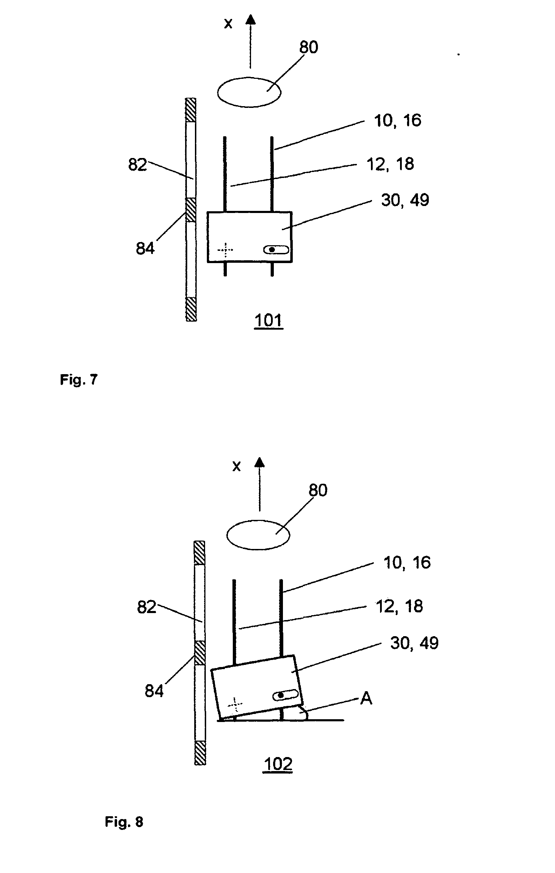

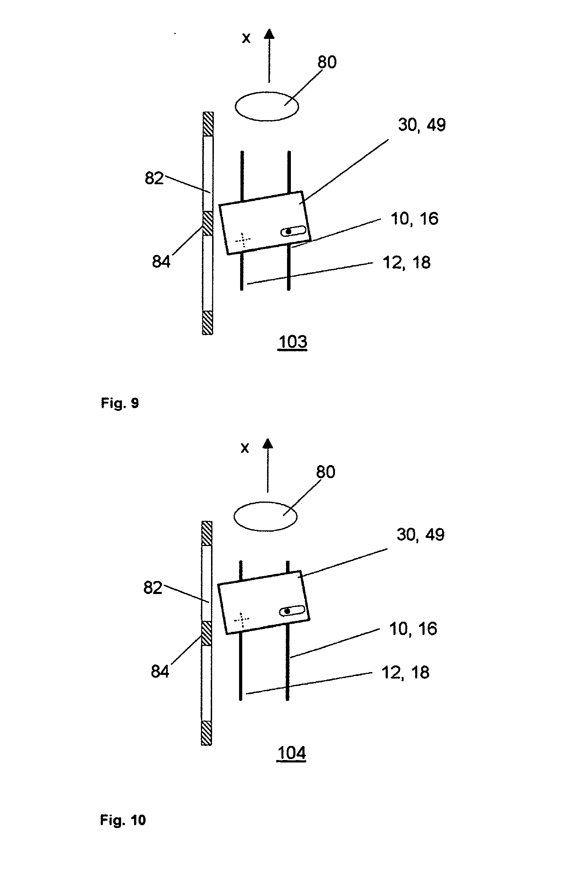

In Fig. 6 bis Fig. 11 sind mehrere Positionen aus dem Bewegungsablauf eines Fahrzeugsitzes nach dem erfindungsgemäßen Verfahren dargestellt. Dabei wird die Sitzschale 49 aus einer Ausgangsposition 100 automatisch in eine Endposition 105 gebracht, in welcher ein Einstieg des Fahrers in das Fahrzeug sowie ein Ausstieg aus dem Fahrzeug vereinfacht möglich ist.

Die Ausgangsposition 100 entspricht dabei der Gebrauchsstellung, welche der Fahrer zum Fahren des Fahrzeuges eingestellt hat, wie auch in Fig. 3 gezeigt. In der Endposition 105 befindet sich die Sitzschale 49 des Fahrzeugsitzes in Längsrichtung x relativ weit vorne und ist gegenüber der Ausgangsposition 100 um die vertikale Achse gedreht, wie auch in Fig. 4 dargestellt.

In Fahrtrichtung vor der Sitzschale 49, welche auf der Konsole 30 befestigt ist, befindet sich ein Lenkrad 80. In Fahrtrichtung links, also schwellerseitig, sind Teile einer Fahrzeugkarosserie mit einer B-Säule 84 sowie eine Türöffnung 82 auf bekannte Art angeordnet.

Zur detaillierten Beschreibung des besagten Bewegungsablaufs wird ein Referenzpunkt 90 definiert, welcher in diesem Beispiel auf der in Fahrtrichtung x vorderen schwellerseitigen Ecke der Konsole 30 liegt.

Ausgehend von der Ausgangsposition 100 werden beide Motoren 40, 42 derart angesteuert, dass die Sitzschale 49 in Längsrichtung x geradlinig bis zu einer Startposition 101 verschoben wird. Die Startposition 101 befindet sich dabei in Fahrtrichtung relativ weit hinten.

Bei Erreichen der Startposition 101 wird der tunnelseitige erste Motor 40 angehalten während der schwellerseitige zweite Motor 42 weiter läuft bis eine Zwischenposition 102 erreicht ist. In der Zwischenposition 102 ist die Sitzschale 49 relativ zu der Startposition 101 um einen ersten Winkel A um die durch den Drehbolzen 22 vertikal verlaufende Achse gedreht.

Der erste Winkel A ist dabei der annähernd größtmögliche Winkel, bei welchem eine Kollision der Sitzschale 49 sowie der Konsole 30 mit der B-Säule 84 der Fahrzeugkarosserie vermieden ist. Der erste Winkel A liegt vorliegend im Bereich von 8° bis 12°, vorzugsweise bei 10°.

Nach Erreichen der Zwischenposition 102 werden beide Motoren 40, 42 derart angesteuert, dass die Sitzschale 49 in Längsrichtung x geradlinig bis zu einer ersten Mittelposition 103 nach vorne verschoben wird. Die erste Mittelposition 103 befindet sich in Fahrtrichtung vor der Zwischenposition 102.

Gemäß einer ersten Variante des Verfahrens werden bei Erreichen der ersten Mittelposition 103 beide Motoren 40, 42 weiter angesteuert, so dass die Sitzschale 49 in Längsrichtung x geradlinig bis zu einer zweiten Mittelposition 104 weiter nach vorne verschoben wird. Die zweite Mittelposition 104 befindet sich dabei in Fahrtrichtung relativ weit vorne, vor der ersten Mittelposition 103. Gemäß der ersten Variante durchfährt also die Sitzschale 49 die erste Mittelposition 103 und gelangt zu der zweiten Mittelposition 104.

Bei Erreichen der zweiten Mittelposition 104 wird der schwellerseitige zweite Motor 42 angehalten während der tunnelseitige erste Motor 40 weiter läuft bis die Endposition 105 erreicht ist. Dadurch wird die Sitzschale 49 weiter gedreht. Dann wird auch der tunnelseitige erste Motor 40 angehalten.

Gemäß einer zweiten Variante des Verfahrens wird bei Erreichen der ersten Mittelposition 103 der schwellerseitige zweite Motor 42 verlangsamt während der tunnelseitige erste Motor 40 mit gleicher Geschwindigkeit weiter läuft bis die Endposition 105 erreicht ist. Dadurch wird die Sitzschale 49 weiter gedreht und gleichzeitig in Längsrichtung x nach vorne geschoben. Dann werden beide Motoren 40, 42 angehalten. Die zweite Mittelposition 104 wird daher gemäß der zweiten Variante nicht erreicht.

Gemäß beider beschriebener Varianten erreicht die Sitzschale 49 also die gleiche Endposition 105. In der Endposition 105 ist die Sitzschale 49 relativ zu der Startposition 101 um einen zweiten Winkel B um die durch den Drehbolzen 22 vertikal verlaufende Achse gedreht. Der zweite Winkel B liegt vorliegend im Bereich von 40° bis 50°, vorzugsweise bei 45°.

In dem hier gewählten Beispiel befindet sich die von dem Fahrer gewählte Gebrauchsstellung, also die Ausgangsposition 100, in Fahrtrichtung vor der Startposition 101. Die Sitzschale 49 wird somit zunächst nach hinten verschoben.

In einem Sonderfall kann sich die von dem Fahrer gewählte Gebrauchsstellung in Fahrtrichtung hinter der Startposition 101 befinden. Eine solche Gebrauchsstellung wird im Folgenden als hintere Startposition 106 bezeichnet. In diesem Fall können beide Motoren 40, 42 derart angesteuert werden, dass die Sitzschale 49 zunächst in Längsrichtung x geradlinig nach vorne bis zu der Startposition 101 verschoben wird.

Vorteilhaft werden in diesem Fall jedoch die Motoren 40, 42 derart angesteuert, dass die Sitzschale 49 gleich aus der hinteren Startposition 106 in die zuvor beschriebene Zwischenposition 102 gedreht wird. Dazu werden die Motoren 40, 42 derart angesteuert, dass der schwellerseitige zweite Motor 42 die Sitzschale 49 in Längsrichtung x nach hinten antreibt während der tunnelseitige erste Motor 40 die Sitzschale 49 in Längsrichtung x nach vorne antreibt bis die Zwischenposition 102 erreicht ist.

In einem weiteren Sonderfall kann die von dem Fahrer gewählte Gebrauchsstellung genau der Startposition 101 entsprechen. In diesem Fall entfällt die beschriebene Längsverschiebung der Sitzschale 49 aus der Ausgangsposition in die Startposition 101.

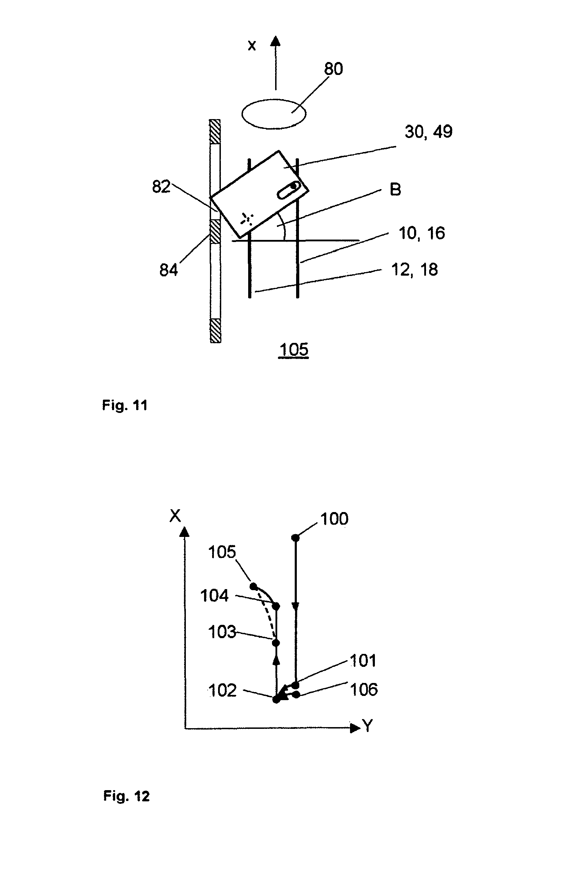

In Fig. 12 ist ein Bewegungsprofil des definierten Referenzpunkt 90 während des hier beschriebenen Bewegungsablaufs des Fahrzeugsitzes dargestellt.

Ausgehend von einer von dem Fahrer gewählten Gebrauchsstellung, welche in Fahrtrichtung vor der Startposition 101 liegt und als Ausgangsposition 100 bezeichnet ist, bewegt sich der Referenzpunkt 90 in Längsrichtung x nach hinten bis die Startposition 101 erreicht ist.

Während der nachfolgenden Drehung um den ersten Winkel A, im gewählten Beispiel entgegen dem Uhrzeigersinn, bewegt sich der Referenzpunkt 90 in Längsrichtung x weiter nach hinten und in Querrichtung y nach links, also zu der Karosserie hin, bis die Zwischenposition 102 erreicht ist.

Anschließend bewegt sich der Referenzpunkt 90 wieder in Längsrichtung x nach vorne bis die erste Mittelposition 103 erreicht ist.

Gemäß der beschriebenen ersten Variante des Verfahrens, welche in dem dargestellten Bewegungsprofil als durchgehende Linie gezeichnet ist, durchfährt der Referenzpunkt 90 die erste Mittelposition 103 und gelangt zu der zweiten Mittelposition 104.

Während der nachfolgenden weiteren Drehung bis zu dem zweiten Winkel B, im gewählten Beispiel entgegen dem Uhrzeigersinn, bewegt sich der Referenzpunkt 90 in Längsrichtung x weiter nach vorne und in Querrichtung y weiter nach links bis die Endposition 105 erreicht ist.

Gemäß der beschriebenen zweiten Variante des Verfahrens, welche in dem dargestellten Bewegungsprofil als unterbrochene Linie gezeichnet ist, bewegt sich der Referenzpunkt 90 aus der ersten Mittelposition 103 in Längsrichtung x weiter nach vorne und in Querrichtung y weiter nach links bis die gleiche Endposition 105 erreicht ist.

In dem Bewegungsprofil ist auch der beschriebene Sonderfall dargestellt, in welchem die von dem Fahrer gewählte Gebrauchsstellung der hinteren Startposition 106 entspricht. Der Referenzpunkt 90 bewegt sich in diesem Fall vorteilhaft gleichzeitig in Längsrichtung x nach hinten und in Querrichtung y nach links bis die erwähnte Zwischenposition 102 erreicht ist.

Die Steuereinheit 70 enthält ferner eine weitere Ablaufsteuerung zur Durchführung weiterer Verfahrensschritte zur automatischen Bewegung der Sitzschale 49 aus der Endposition 105 zurück in die zuvor eingestellte Gebrauchsposition. Mittels der Bedieneinheit 72 ist auch diese weitere Ablaufsteuerung anwählbar.

Zu Beginn des erfindungsgemäßen Verfahrens wird dabei die eingestellte Gebrauchsposition, also die Ausgangsposition 100, beziehungsweise die hintere Startposition 106, gespeichert. Das besagte weitere Verfahren umfasst die zuvor beschriebenen Schritte in umgekehrter Reihenfolge und mit umgekehrten Richtungen. Die Sitzschale 49 wird dabei automatisch in die zuvor gespeicherte Gebrauchsposition zurück gebracht.

In einem Fahrzeug, dessen Lenkrad 80 ebenfalls mit einem Einstellantrieb ausgestattet ist, kann während des beschriebenen Bewegungsablaufs das Lenkrad 80 in Längsrichtung x von der Sitzschale 49 weg und/oder in Vertikalrichtung nach oben bewegt werden. Insbesondere kann besagte Bewegung des Lenkrads 80 während der Drehung der Sitzschale 49 um den ersten Winkel A stattfinden.

In diesem Fall verfügt auch das Lenkrad 80 oder dessen Einstellantrieb über eine Kommunikationsschnittstelle zum Datenaustausch mit dem Steuersystem 70 oder den Motorsteuersystemen der Motoren 40, 42.

Optional ist auch eine Fußstütze oder Unterschenkelabstützung an der Konsole 30 oder der Sitzschale 49 anbringbar, womit die Füße des Fahrers automatisch über den Schweller gehievt werden.

Eine ähnliche Verbesserung ergibt sich, wenn der Schweller klappbar ausgestaltet ist. Vorteilhaft wird eine Klappung des Schwellers in den Bewegungsablauf des erfindungsgemäßen Verfahrens integriert.

### Bezugszeichenliste

- 10: erste Unterschiene
- 12: zweite Unterschiene
- 14: Fahrzeugboden
- 16: erste Oberschiene
- 18: zweite Oberschiene
- 22: Drehbolzen
- 24: erster Bolzen
- 26: zweiter Bolzen
- 28: dritter Bolzen
- 30: Konsole
- 32: Bohrung
- 34: erste Ausnehmung
- 36: zweite Ausnehmung
- 38: dritte Ausnehmung
- 40: erster Motor
- 42: zweiter Motor
- 44: Sitzkissen
- 46: vorderes Ende des Sitzkissens
- 48: hinteres Ende des Sitzkissens
- 49: Sitzschale
- 50: Rückenlehne
- 70: Steuereinheit
- 72: Bedieneinheit
- 74: erste Positionserfassungseinheit
- 76: zweite Positionserfassungseinheit
- 80: Lenkrad
- 82: Türöffnung
- 84: B-Säule
- 90: Referenzpunkt
- 100: Ausgangsposition
- 101: Startposition
- 102: Zwischenposition
- 103: erste Mittelposition
- 104: zweite Mittelposition
- 105: Endposition
- 106: hintere Startposition
- A: erster Winkel
- B: zweiter Winkel
- x: Längsrichtung
- y: Querrichtung

## Patentansprüche

1. Verfahren zur Steuerung eines längseinstellbaren und drehbaren Fahrzeugsitzes,
welcher eine in einer ersten Unterschiene (10) beweglich geführte erste Oberschiene (16), eine in einer zweiten Unterschiene (12) beweglich geführte zweite Oberschiene (18), einen ersten Motor (40) zum Antrieb der ersten Oberschiene (16), einen zweiten Motor (42) zum Antrieb der zweiten Oberschiene (18) und eine Sitzschale (49) umfasst,
wobei durch eine gleich gerichtete Verschiebung der Oberschienen (16, 18) relativ zu den Unterschienen (10, 12) die Sitzschale (49) geradlinig verschoben wird und wobei durch eine Verschiebung der ersten Oberschiene (16) relativ zu der zweiten Oberschiene (18) die Sitzschale (49) eine Drehung um eine vertikale Achse erfährt,
wobei:
- eine Ausgangsposition (100) gespeichert wird,
- die Sitzschale (49) aus der Ausgangsposition (100) in eine Startposition (101) geradlinig verschoben wird,
- aus der Startposition (101) die Sitzschale (49) um einen ersten Winkel (A) in eine Zwischenposition (102) gedreht wird,
- die Sitzschale (49) in Fahrtrichtung in eine erste Mittelposition (103) geradlinig verschoben wird,
- die Sitzschale (49) bis zu einem zweiten Winkel (B) in eine Endposition (105) gedreht wird.

2. Verfahren nach Anspruch 1, **dadurch gekennzeichnet, dass** die Ausgangsposition (100) sich in Fahrtrichtung vor der Startposition (101) befindet.

3. Verfahren nach einem der vorstehenden Ansprüche, **dadurch gekennzeichnet, dass** die Sitzschale (49) aus der Endposition (105) in die Ausgangsposition (100) zurück gebracht wird.

4. Verfahren nach einem der vorstehenden Ansprüche, **dadurch gekennzeichnet, dass** während der Drehung um den ersten Winkel (A) der erste Motor (40) angehalten ist.

5. Verfahren nach einem der vorstehenden Ansprüche, **dadurch gekennzeichnet, dass** die Sitzschale (49) aus der ersten Mittelposition (103) geradlinig verschoben wird bis die zweite Mittelposition (104) erreicht ist, und dass die Sitzschale (49) anschließend bis zu dem zweiten Winkel (B) gedreht wird bis die Endposition (105) erreicht ist.

6. Verfahren nach Anspruch 5, **dadurch gekennzeichnet, dass** während der Drehung bis zu dem zweiten Winkel (B) der zweite Motor (42) angehalten ist.

7. Verfahren nach einem der Ansprüche 1 bis 4, **dadurch gekennzeichnet, dass** die Sitzschale (49) aus der ersten Mittelposition (103) bis zu dem zweiten Winkel (B) gedreht und gleichzeitig geradlinig verschoben wird bis die Endposition (105) erreicht ist.

8. Verfahren nach Anspruch 7, **dadurch gekennzeichnet, dass** während der Drehung bis zu dem zweiten Winkel (B) der zweite Motor (42) mit verringerter Geschwindigkeit im Vergleich zu dem vorhergehenden Verfahrensschritt und/oder mit verringerter Geschwindigkeit im Vergleich zu dem ersten Motor (40) läuft.

9. Verfahren nach einem der vorstehenden Ansprüche, **dadurch gekennzeichnet, dass** gleichzeitig ein Lenkrad (80) in Längsrichtung (x) von der Sitzschale (49) weg und/oder in Vertikalrichtung nach oben bewegt wird.

10. Verfahren nach Anspruch 9, **dadurch gekennzeichnet, dass** das Lenkrad (80) während der Drehung um den ersten Winkel (A) in Längsrichtung (x) von der Sitzschale (49) weg und/oder in Vertikalrichtung nach oben bewegt wird.

## Claims

1. Method for controlling a longitudinally adjustable and rotatable vehicle seat
which comprises a first upper rail (16) movably guided in a first lower rail (10), a second upper rail (18) movably guided in a second lower rail (12), a first motor (40) for driving the first upper rail (16), a second motor (42) for driving the second upper rail (18) and a seat shell (49),
wherein by means of an aligned displacement of the upper rails (16, 18) relative to the lower rails (10, 12) the seat shell (49) is displaced in a straight line and wherein by means of a displacement of the first upper rail (16) relative to the second upper rail (18) the seat shell (49) undergoes a rotation about a vertical axis,
wherein:
- an initial position (100) is stored,
- the seat shell (49) is displaced in a straight line from the initial position (100) into a starting position (101),
- the seat shell (49) is rotated by a first angle (A) from the starting position (101) into an intermediate position (102),
- the seat shell (49) is displaced in a straight line in the direction of travel into a first central position (103),
- the seat shell (49) is rotated by a second angle (B) into an end position (105).

2. Method according to Claim 1, **characterized in that** the initial position (100) is located in front of the starting position (101) in the direction of travel.

3. Method according to one of the preceding claims, **characterized in that** the seat shell (49) is moved back from the end position (105) into the initial position (100).

4. Method according to one of the preceding claims, **characterized in that** the first motor (40) is stopped during the rotation by the first angle (A).

5. Method according to one of the preceding claims, **characterized in that** the seat shell (49) is displaced in a straight line from the first central position (103) until the second central position (104) is reached, and the seat shell (49) is subsequently rotated by the second angle (B) until the end position (105) is reached.

6. Method according to Claim 5, **characterized in that** the second motor (42) is stopped during the rotation by the second angle (B).

7. Method according to one of Claims 1 to 4, **characterized in that** the seat shell (49) is rotated from the first central position (103) by the second angle (B) and at the same time displaced in a straight line until the end position (105) is reached.

8. Method according to Claim 7, **characterized in that** during the rotation by the second angle (B) the second motor (42) operates at reduced speed in comparison with the previous method step and/or at reduced speed in comparison with the first motor (40).

9. Method according to one of the preceding claims, **characterized in that** at the same time a steering wheel (80) is moved away from the seat shell (49) in the longitudinal direction (x) and/or upwardly in the vertical direction.

10. Method according to Claim 9, **characterized in that** during the rotation by the first angle (A) the steering wheel (80) is moved away from the seat shell (49) in the longitudinal direction (x) and/or upwardly in the vertical direction.

## Revendications

1. Procédé de commande d'un siège de véhicule réglable en longueur et tournant, qui comprend un premier rail supérieur (16) guidé en mouvement dans un premier rail inférieur (10), un deuxième rail supérieur (18) guidé en mouvement dans un deuxième rail inférieur (12), un premier moteur (40) pour l'entraînement du premier rail supérieur (16), un deuxième moteur (42) pour l'entraînement du deuxième rail supérieur (18), et un baquet de siège (49), dans lequel le baquet de siège (49) est déplacé en ligne droite par un déplacement identiquement orienté des rails supérieurs (16, 18) par rapport aux rails inférieurs (10, 12) et dans lequel le baquet de siège (49) décrit une rotation autour d'un axe vertical par un déplacement du premier rail supérieur (16) par rapport au deuxième rail supérieur (18), dans lequel:
- on mémorise une position initiale (100),
- on déplace le baquet de siège (49) en ligne droite de la position initiale (100) à une position de départ (101),
- on fait tourner le baquet de siège (49) d'un premier angle (A) de la position de départ (101) à une position intermédiaire (102),
- on déplace le baquet de siège (49) en ligne droite dans la direction de roulage dans une première position moyenne (103),
- on fait tourner le baquet de siège (49) jusqu'à un deuxième angle (B) dans une position finale (105).

2. Procédé selon la revendication 1, **caractérisé en ce que** la position initiale (100) se trouve devant la position de départ (101) dans la direction de roulage.

3. Procédé selon l'une quelconque des revendications précédentes, **caractérisé en ce que** l'on ramène le baquet de siège (49) de la position finale (105) à la position initiale (100).

4. Procédé selon l'une quelconque des revendications précédentes, **caractérisé en ce que** le premier moteur (40) est arrêté pendant la rotation du premier angle (A).

5. Procédé selon l'une quelconque des revendications précédentes, **caractérisé en ce que** l'on déplace le baquet de siège (49) en ligne droite à partir de la première position moyenne (103) jusqu'à ce que la deuxième position moyenne (104) soit atteinte, et **en ce que** l'on fait ensuite tourner le baquet de siège (49) jusqu'au deuxième angle (B) jusqu'à ce que la position finale (105) soit atteinte.

6. Procédé selon la revendication 5, **caractérisé en ce que** le deuxième moteur (42) est arrêté pendant la rotation jusqu'au deuxième angle (B).

7. Procédé selon l'une quelconque des revendications 1 à 4, **caractérisé en ce que** l'on fait tourner le baquet de siège (49) jusqu'au deuxième angle (B) à partir de la première position moyenne (103) et on le déplace simultanément en ligne droite jusqu'à ce que la position finale (105) soit atteinte.

8. Procédé selon la revendication 7, **caractérisé en ce que**, pendant la rotation jusqu'au deuxième angle (B), le deuxième moteur (42) tourne avec une vitesse réduite par rapport à l'étape précédente et/ou avec une vitesse réduite par rapport au premier moteur (40).

9. Procédé selon l'une quelconque des revendications précédentes, **caractérisé en ce que** l'on déplace un volant de direction (80) simultanément en direction longitudinale (x) à l'écart du baquet de siège (49) et/ou en direction verticale vers le haut.

10. Procédé selon la revendication 9, **caractérisé en ce que** l'on déplace le volant de direction (80) en direction longitudinale (x) à l'écart du baquet de siège (49) et/ou en direction verticale vers le haut pendant la rotation du premier angle (A).
